# EUROPEAN PATENT SPECIFICATION

(11) **EP 0 443 273 B1**
(45) Date of publication and mention of the grant of the patent: **16.02.1994**
(21) Application number: 90314384.0
(22) Date of filing: 28.12.1990
(51) Int. Cl.: F02B 75/00, F02B 75/16, F02M 35/10

(54) **A vertical internal combustion engine having overhead valves**
Vertikale Brennkraftmaschine mit hängenden Ventilen
Moteur à combustion interne vertical à soupapes en culasse

(30) Priority: 22.02.1990 JP 41522/90; 27.03.1990 JP 30493/90 U
(43) Date of publication of application: 28.08.1991
(60) Divisional application: 93200300.7
(73) Proprietor: MITSUBISHI JUKOGYO KABUSHIKI KAISHA, Tokyo (JP)
(72) Inventor: Kobayashi, Kazuyuki, c/o Nagoya Machinery Works, cho, Nakamura-ku, Nagoya, Aichi Prefect. (JP)
(74) Representative: Huntingford, David Ian

(56) References cited:
- FR-A- 2 534 626
- US-A- 4 864 981
- US-A- 4 893 597

## Description

The present invention relates to a vertical internal combustion engine having overhead valves, whose crankshaft is arranged vertically.

One example of a conventional internal vertical combustion engine having overhead valves (FR-A- 2 534 626) is illustrated in Figs. 5 to 7 of the accompanying drawings. Reference numeral 1 denotes a cylinder block comprising a cylinder barrel 1A, whose centre line is level, a cylinder head 1B and a cylinder head cover 1C, and 2 denotes a crankcase connected with cylinder barrel 1A of cylinder block 1. A crankshaft 4 is supported vertically in the centre of the crankcase 2 by bearings 3, 5 denotes a piston, and 6 denotes a connecting rod.

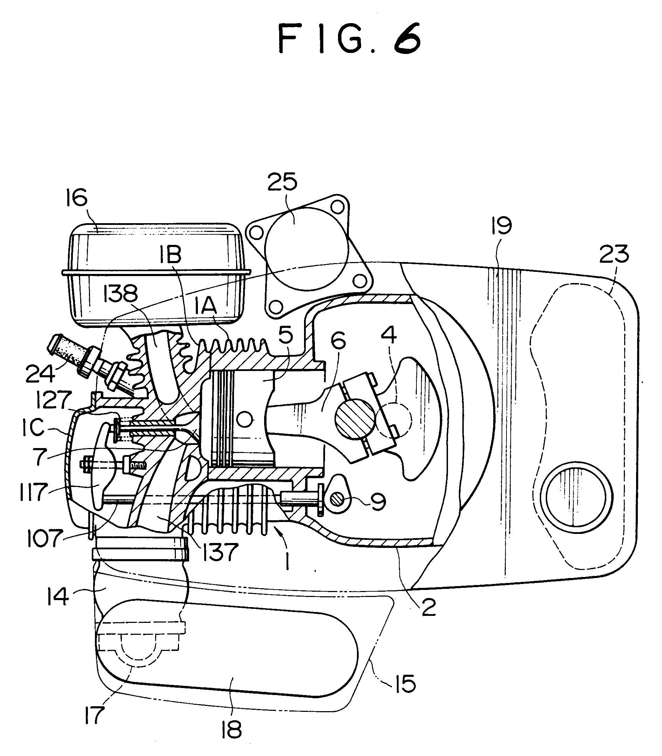

In the cylinder head 1B, a suction valve 7 and exhaust valve 8 are arranged as overhead valves. The suction valve 7 and exhaust valve 8 are part of a valve mechanism which includes a camshaft 9 (shown in Fig.6) rotating synchronously with crankshaft 4, a pair of push rods 107 and 108 in upper and lower parts of the cylinder head, which are caused to reciprocate in a straight line by the rotation of the camshaft 9, a pair of rocker arms 117 and 118 which are caused to move up and down by the actuation of said push rods 107 and 108, and a return spring 127 associated with each valve 7 and 8.

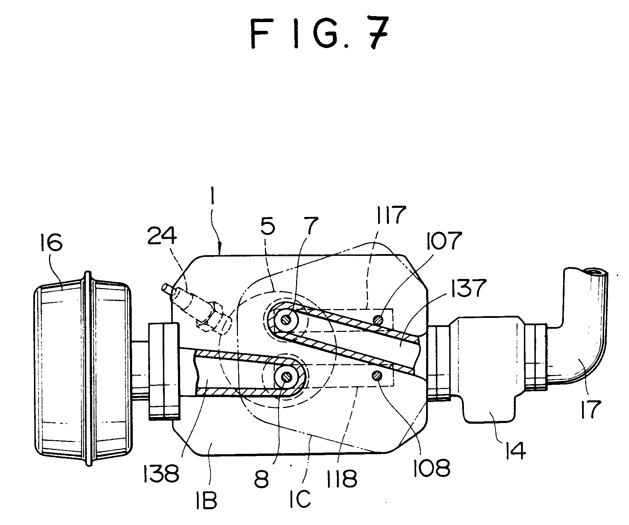

Viewed towards the cylinder-head cover 1C, a suction port 137 opens on the right-hand side of cylinder head 1B, and an exhaust port 138 opens on the left-hand side. That is, suction port 137 and exhaust port 138 open such that suction and exhaust gases may flow crosswise. The suction valve 7 and exhaust valve 8 are arranged parallel to each other in the same vertical plane, with suction valve 7 in the higher position. As shown in Fig.7, suction port 137 lies between push rod 107 for the suction valve and push rod 108 for the exhaust valve, and it slopes up to suction valve 7 along an imaginary straight line.

In the cylinder head 1B, the bottom of the opening of suction port 137 is lower in position than the top of the opening of exhaust port 138 (see Fig.7).

The location at which a carburettor 14 is connected with the opening of suction port 137 is at the same height as the location at which an exhaust muffler 16 is connected with the opening of exhaust port 138.

Carburettor 14 is connected directly with the opening of the suction port 137, an air cleaner 15 is connected with said carburettor 14, and exhaust muffler 16 is connected with the opening of exhaust port 138. Reference number 17 denotes an elbow connecting carburettor 14 with air cleaner 15, and 18 is an air cleaner element.

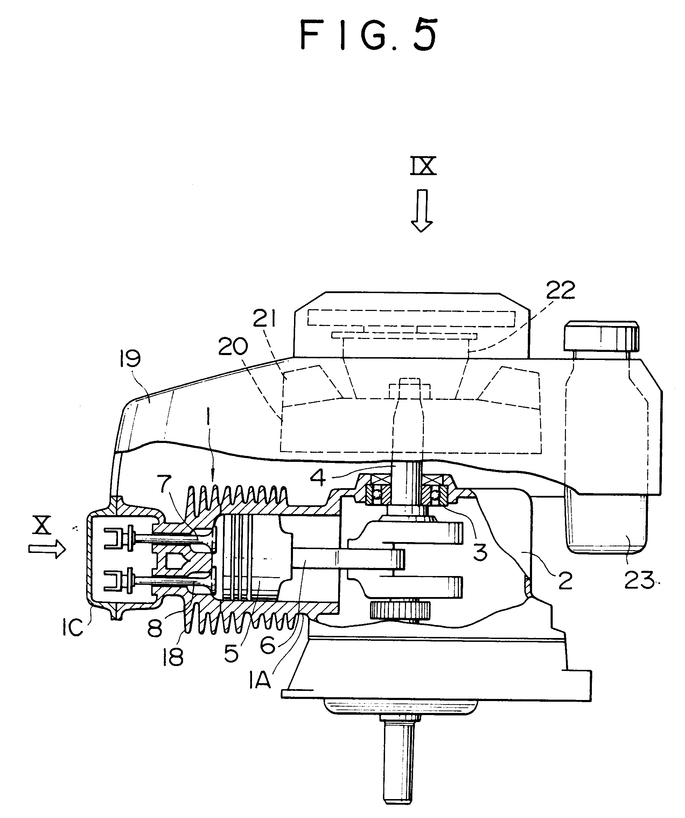

As shown in Figs. 5 and 6, a baffle cover 19 is placed over the cylinder block 1 and crankcase 2, wherein crankshaft 4, flywheel 20 and fan 21 are arranged. Numeral 22 is a recoil starter, and 23 is a fuel tank. Spark plug 24 and starter motor 25 are arranged on the same side of the block as exhaust muffler 16.

However, this conventional vertical internal combustion engine having overhead valves has problems as follows.
1. The position for installing the spark plug 24 is limited. That is, since suction port 137 and exhaust port 138 open on the two sides of cylinder head 1B, respectively, the position for disconnecting an ignition plug inserted in the cylinder head must be turned upward at as sharp an angle as possible away from exhaust port 138 so as to facilitate maintenance. This is because exhaust port 138 is heated by exhaust heat when the engine is being operated.
2. The combustion chamber of cylinder head 1B cannot be cooled down sufficiently.
3. The exhaust system, which is positioned to the leeside of cooling air, may not be cooled down sufficiently. Among other things, it is impossible to cool down the region around the exhaust valve, and the valve guide may fall off due partly to the difference in thermal expansion between the valve guide and the cylinder head, both of which are fixed in the cylinder head.
4. The suction part 137 lies on an upward gradient, and fuel in the form of fluid drops tends to flow back toward carburettor 14.

In order to overcome the above stated problems, it is an object of the present invention to provide a vertical internal combustion engine having overhead valves which improves the fluidity of air-fuel mixture in the engine, enhances the cooling effect of cooling air, and improves maintenance.

In accordance with the present invention, there is provided a vertical internal combustion engine having overhead valves, a vertically disposed crankshaft and a horizontally disposed cylinder, and comprising a carburettor arranged on one side of said cylinder and an exhaust muffler arranged on the other side of said cylinder, generally opposite the carburettor, and wherein a suction port coupled to said carburettor has a horizontal straight portion and a curved portion leading to a suction valve, and wherein the central axis of said horizontal straight portion and the central axis of the carburettor are aligned substantially on the same straight line in the same horizontal plane, an extension of the central axis of an exhaust port connected with said exhaust muffler extending through an exhaust valve and crossing an extension of the axis of said horizontal straight portion obliquely from below.

An engine constructed in accordance with the present invention produces the following effects:
1. Since the exhaust port is open on the lower surface of the cylinder head, a curved muffler may be installed over the left-hand side of the cylinder head, whereby a higher degree of freedom for arranging an ignition plug may be obtained,
2. Part of the exhaust port, as in the conventional engine, does not exist in the passage of cooling air, thereby enabling cooling air to flow smoothly, whereby the combustion chamber around the ignition plug may be cooled down effectively.
3. The cooling air flows further into the region around the exhaust valve, thereby preventing overheating in a valve guide.
4. The exhaust port in the cylinder head is shorter than the conventional one and heat may not escape from the muffler due to a gasket, whereby the exhaust system on the cylinder head accumulates less heat.
5. Since the central aixs of a carburettor and the central axis of the horizontal straight portion of the suction port are arranged substantially on the same straight line in the same horizontal plane, the air-fuel mixture keeps flowing in a stable manner. In addition, the lower hole of the tapped hole for installing the carburettor prevents castings, and a blow hole in the tapped hole need never be made.

The invention is described further hereinafter, by way of example only, with reference to the accompanying drawings, in which:-
Fig.1 is a fragmentary, cross-sectional view of a first embodiment of a vertical internal combustion engine having overhead valves, in accordance with the present invention;
Fig.2 is a view seen from the direction of arrow II in Fig.1;
Fig.3 is a view seen from the direction of arrow III in Fig.2;
Fig.4 is a vertical, cross-sectional view of a suction port and an exhaust port in the cylinder head in the first embodiment;
Fig.5 is a fragmentary, cut-away side view of a conventional vertical internal combustion engine having overhead valves;
Fig.6 is a fragmentary, cut-away top view seen from arrow IX in Fig.5; and
Fig.7 is a fragmentary, cut-away front view seen from arrrow X in Fig.5.

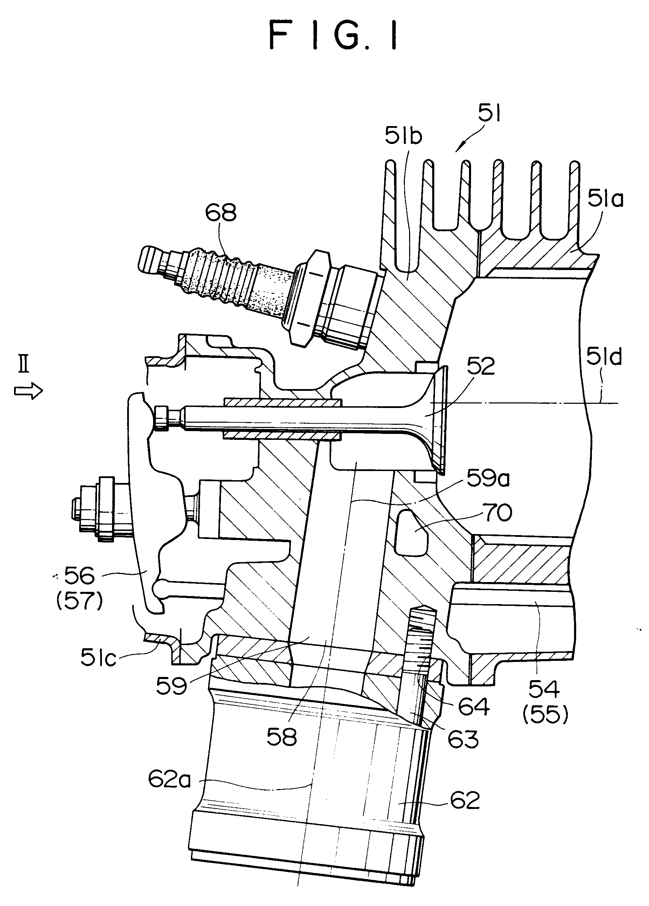

Referring now to Figs. 1 to 4 in detail, description is given of an embodiment of the present invention. In these figures, reference 51 denotes a cylinder block comprising a cylinder barrel 51a, a cylinder head 51b, and a cylinder-head cover 51c. Centre line 51d of cylinder barrel 51a is horizontal.

Reference 52 is a suction (inlet) valve and 53 is an exhaust valve, both of which are arranged as a pair of overhead valves in upper and lower parts of cylinder head 51b.

A pair of push rods 54 and 55 are arranged in the upper and lower parts of the cylinder head, and are caused to reciprocate when a camshaft rotates synchronously with a crankshaft (not shown in any figure). The camshaft, push rods 54 and 55, and a pair of rocker arms 56 and 57 caused to move up and down by the actuation of the rods 54 and 55, constitute a valve mechanism.

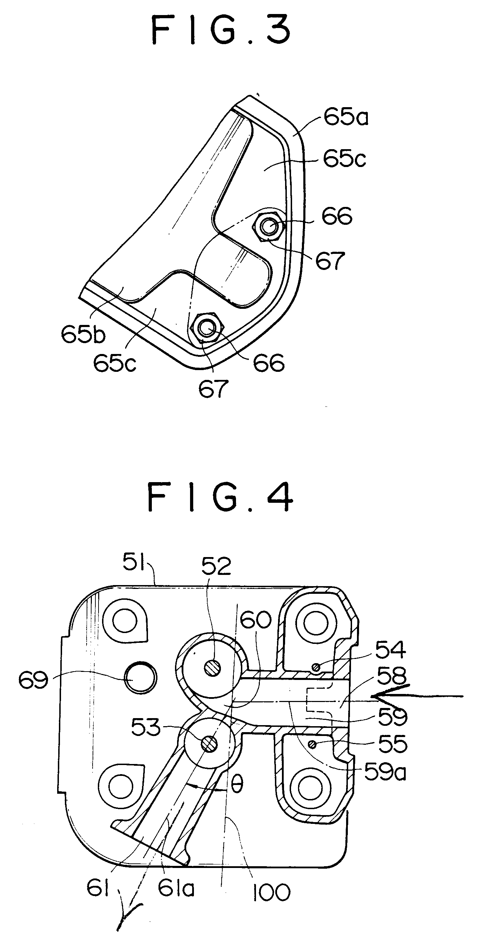

Reference 58 is a suction port and, as viewed in Fig.4, it opens on the right-hand side of the cylinder head 51b.

The suction port 58 is formed with a horizontal, straight portion 59 and a curved portion 60. Curved portion 60 is connected with suction valve 52 and horizontal, straight portion 59 is connected with carburettor 62. Reference 70 is an opening in the cylinder head for pushing cooling air in the direction of an output shaft (both upward and downward). The opening 70 is surrounded by the cylinder head wall on the crankcase side of the horizontal straight portion 59, the wall defining the end of the cylinder and the circumferential walls of the openings for the push rods. Reference 61 is an exhaust port whose centre line 61a extends through exhaust valve 53 and crosses horizontal straight portion 59 of suction port 58 diagonally from below. In Fig.4, exhaust port 61 is tilted at an angle ϑ of 5° to 45° between centre line 61a and the vertical centre line 100 of the crankshaft.

The suction valve 52 and the exhaust valve 53 are arranged parallel to each other in the same vertical plane, with suction valve 52 in the higher position. The horizontal straight portion 59 extends between push rod 54 for the suction valve and push rod 55 for the exhaust valve. Reference 62 denotes a carburettor. The shaft centre 62a of the carburettor is aligned on the same straight line in the same horizontal plane as the central axis 59a of horizontal portion 59 of suction port 58. In Fig.1, carburettor 62 is fixed to cylinder head 51b by screwing a bolt 63 into a tapped hole 64 arranged in a hole (for preventing castings) of cylinder head 51b. Reference 65 is an exhaust muffler comprising a right-hand body 65a and a left-hand body 65b, the right-hand body 65a being fixed over the left-hand body 65b. Muffler 65 is installed by fixing a nut 67 around bolt 66 in exhaust port 61. Reference 65c is a part formed on the left-hand body 65b for enabling fixing. Reference 68 is an ignition plug screwed into a tapped hole 69 of cylinder head 51b.

In a vertical internal combustion engine having overhead valves, constructed in the above described manner, an air-fuel mixture produced in carburettor 62 passes along horizontal straight portion 59 and up curved portion 60 in the suction port 58, and the suction valve 52 opens, guiding the mixture into the cylinder. At this time, the air-fuel mixture cools down exhaust gas, because the curved portion 60 is close to the exhaust port 61. The curved portion 60 causes the air-fuel mixture to slew around and guides it into the cylinder.

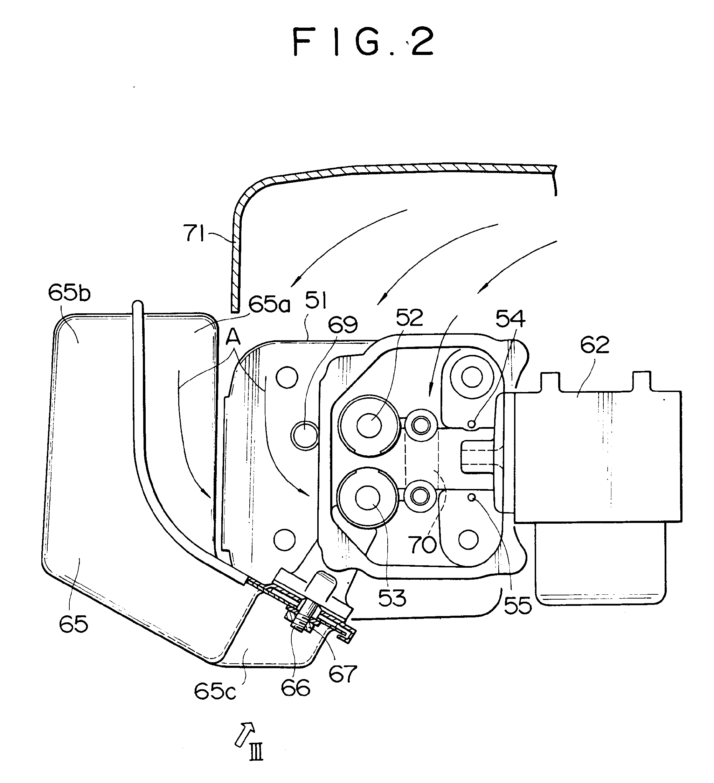

In addition, since the central axis 62a of carburettor 62 and the central axis 59a of the horizontal straight portion of the suction port 58 are aligned on the same straight line in the same horizontal plane, the air-fuel mixture keeps flowing in a stable manner. When the exhaust valve 53 opens, exhaust gas flows from the cylinder into muffler 65 through exhaust port 61, wherein the gas is muffled and emitted. Here, not only because exhaust port 61 slopes up towards the suction port 58 and is open downward, but also because muffler 65 is fixed directly to cylinder head 51b without an exhaust pipe, the muffler may be arranged over the lower part and the side of cylinder block 51, as shown in Fig.2, thereby enabling the enlargement of the capacity of the muffler and improving the muffling effect.

As again shown in Fig. 2 cooling air coming from a cooling fan (not shown in any figure) flows in the direction of arrow A inside baffle plate 71, cooling down the ignition plug 68 fixed in tapped hole 69, cylinder head 51b, etc. At this time, since low-temperature cooling air from the baffle plate 71 flows directly to ignition plug 68 and cools down the region around the plug, the combustion chamber around ignition plug 68 may be sufficiently cooled down.

Furthermore, the cooling air cools sufficiently the valve guide of the exhaust valve 53, whereby the exhaust valve 53 and its valve guide may be prevented from seizure.

The described embodiment of the present invention includes the above-described elements and produces the following effects.
(1) The exhaust port opens in the lower part of the cylinder head and a curved muffler may be arranged over one side of the cylinder head, whereby a higher degree of freedom for arranging an ignition plug may be obtained and maintenance may be facilitated.
(2) Part of the exhaust port does not lie in the path of cooling air, thereby enabling cooling air to flow smoothly, whereby the combustion chamber around the ignition plug may be cooled down completely.
(3) Cooling air flows further into the region around the exhaust valve and prevents overheating of the valve guide, whereby the valve guide never falls off.
(4) The exhaust port in the cylinder head is shorter than the conventional one and heat may not escape from the muffler due to a gasket, whereby the exhaust system in the cylinder head accumulates less heat, thereby enhancing the cooling effect.
(5) The central axis of the carburettor and the central axis of the horizontal straight portion in the suction port are aligned almost on the same straight line in the same horizontal plane, whereby the air-fuel mixture in the engine keeps flowing in a stable manner and high output is possible. In addition, the lower part of the tapped hole for installing the carburettor may prevent castings, a blow hole in the tapped hole need never be made.

## Claims

1. A vertical internal combustion engine having overhead valves, a vertically disposed crankshaft and a horizontally disposed cylinder, and comprising a carburettor (62) arranged on one side of said cylinder and an exhaust muffler (65) arranged on the other side of said cylinder, generally opposite the carburettor (62); characterised in that a suction port (58) coupled to said carburettor, has a horizontal straight portion (59) and a curved portion (60) leading to a suction valve (52); and in that the central axis (59a) of said horizontal straight portion (59) and the central axis (62a) of said carburettor (62) are aligned substantially on the same straight line in the same horizontal plane, an extension of the central axis (61a) of an exhaust port (61) connected with said exhaust muffler (65) extending through an exhaust valve (53) and crossing an extension of the axis (58) of said horizontal straight portion (59) obliquely from below.

2. A vertical internal combustion engine as claimed in claim 1, wherein the exhaust muffler (65) is fixed directly to the cylinder head (51b).

3. A vertical internal combustion engine as claimed in claim 1 or 2, wherein part of the suction port (58) and part of the exhaust port (61) are arranged next to each other with a bulkhead inbetween.

4. A vertical internal combustion engine as claimed in claim 1, wherein the horizontal straight portion (59) of the suction port extends between a pair of push rods (54,55) disposed respectively in upper and lower parts of the cylinder head (51b).

## Patentansprüche

1. Vertikale Brennkraftmaschine mit hängenden Ventilen, mit einer vertikal angeordneten Kurbelwelle und mit einem horizontal angeordneten Zylinder, die einen auf einer Seite des Zylinders angeordneten Vergaser (62) und einen auf der anderen Seite des Zylinders, insgesamt gegenüber dem Vergaser (62) angeordneten Auspufftopf (65) aufweist, dadurch gekennzeichnet, daß ein mit dem Vergaser verbundener Ansaugkanal (58) einen horizontalen geraden Abschnitt (59) und einen gekrümmten Abschnitt (60) hat, der zu einem Ansaugventil (52) führt, und daß die Mittelachse (59a) des horizontalen geraden Abschnitts (59) und die Mittelachse (62a) des Vergasers (62) im wesentlichen auf der gleichen geraden Linie in der gleichen horizontalen Ebene ausgerichtet sind, wobei eine Verlängerung der Mittelachse (61a) eines mit dem Auspufftopf (65) verbundenen Auslaßkanals (61) sich durch ein Auslaßventil (53) erstreckt und eine Verlängerung der Achse (58) des horizontalen geraden Abschnitts (59) schräg von unten schneidet.

2. Vertikale Brennkraftmaschine nach Anspruch 1, bei welcher der Auspufftopf (65) direkt an dem Zylinderkopf (51b) befestigt ist.

3. Vertikale Brennkraftmaschine nach Anspruch 1 oder 2, bei welcher ein Teil des Ansaugkanals (58) und ein Teil des Auslaßkanals (61) nebeneinander mit einer Trennwand dazwischen angeordnet sind.

4. Vertikale Brennkraftmaschine nach Anspruch 1, bei welcher sich der horizontale gerade Abschnitt (59) des Ansaugkanals zwischen einem Paar von Stößelstangen (54, 55) erstreckt, die in dem oberen bzw. unteren Teil des Zylinderkopfes (51b) angeordnet sind.

## Revendications

1. Moteur à combustion interne vertical ayant des soupapes en tête, un vilebrequin disposé verticalement et un cylindre disposé horizontalement, et comprenant un carburateur (62) placé sur un côté dudit cylindre et un pot d'échappement (65) placé de l'autre côté dudit cylindre, sensiblement à l'opposé du carburateur (62) ; caractérisé en ce qu'une tubulure d'admission (58) raccordée audit carburateur comprend une partie rectiligne horizontale (59) et une partie courbe (60) conduisant à une soupape d'admission (52) ; et en ce que l'axe central (59a) de ladite partie rectiligne horizontale (59) et l'axe central (62a) dudit carburateur (62) sont alignés sensiblement sur la même ligne droite dans le même plan horizontal, un prolongement de l'axe central (61a) d'une tubulure d'échappement (61) raccordée audit pot d'échappement (65) passant par une soupape d'échappement (53) et croisant un prolongement de l'axe (58) de ladite partie rectiligne horizontale (59) obliquement par le dessous.

2. Moteur à combustion interne vertical suivant la revendication 1, dans lequel le pot d'échappement (65) est fixé directement à la culasse (51b).

3. Moteur à combustion interne vertical suivant la revendication 1 ou 2, dans lequel une partie de la tubulure d'admission (58) et une partie de la tubulure d'échappement (61) sont placées l'une près de l'autre avec interposition d'une cloison.

4. Moteur à combustion interne vertical suivant la revendication 1, dans lequel la partie rectiligne horizontale (59) de la tubulure d'admission s'étend entre deux poussoirs (54,55) disposés respectivement dans les parties supérieure et inférieure de la culasse (51b).
